# EUROPEAN PATENT APPLICATION

(11) **EP 2 940 073 A2**
(43) Date of publication of application: **04.11.2015**
(21) Application number: 15001231.8
(22) Date of filing: 24.04.2015
(51) Int. Cl.: C08L 25/00

(54) **COMPOSITION OF AN INSULATING MATERIAL, METHOD FOR MANUFACTURING AN INSULATING MATERIAL AND USE OF SUCH AN INSULATING MATERIAL**

(30) Priority: 30.04.2014 BE 201400304
(71) Applicant: Es-Projects, besloten vennootschap met beperkte aansprakelijkheid, 3530 Houthalen-Helchteren (BE)
(72) Inventor: Cesario, Silvio Felice, 3530 Houthalen (BE)
(74) Representative: Donné, Eddy

(57) **Abstract**

Composition of an insulating material (2), characterised in that the composition consists of polystyrene granules (3a) and rubber granules (3b) and binder (4) for binding the polystyrene granules (3a) and the rubber granules (3b) to one another.

## Description

The present invention relates to a composition of an insulating material.

More specifically, the invention is a composition of an insulating material that can be used as floor insulation.

The invention is not limited to this usage, but will be able to be used in many different industries and applications.

A floor insulation based on plates or blocks of polyisocyanurate or PIR are already known, which are affixed on the supporting floor after which the floor can be further finished with screed and a desired finishing layer.

Such PIR plates provide very good thermal insulation.

The thermal insulation is expressed using the Lambda value (λ value) or coefficient of heat conduction. The lower the λ value, the better the thermal insulation of the material.

A disadvantage of such plates is that the supporting floor must be made flat before the plates can be affixed thereon, for example by applying a levelling layer of screed. This will make the construction smaller, so that less space is left for the thermal insulation layer and the finishing layer.

Moreover, such a levelling layer is necessary when pipes or cables under the floor are to be concealed.

The use of such plates inevitably leads to a loss of material because at least some of the plates have to be cut into the suitable shape during installation. Also the plates will never fit precisely around pipes and similar.

Moreover the plates can never be laid seamlessly. It is clear that this will be coupled with heat loss through the seams. Moreover such plates will inevitably shrink over the course of time, which can rise to eight percent. As a result the seams can become larger or wider resulting in even more heat loss.

A floor insulation material based on polyurethane foam or PUR foam is already known.

Polyurethane is applied directly on the substrate, generally by spraying, such that a foam layer is formed with a good insulation value.

An additional advantage is that polyurethane can be applied directly on the supporting floor without the need for a levelling layer. The polyurethane will as it were fulfil the role of this levelling layer itself. Moreover there is less loss of material compared to the use of PIR plates, PUR plates, EPS plates or EPX plates.

A disadvantage of PUR foam is that it is expensive and that it is less fire retardant than PIR plates, for example.

Moreover the substrate or supporting floor must first be cleared of dust, dirt, water, grease, moisture and other contaminants before the PUR foam is applied, as any contaminants on the substrate can affect the hardening and adhesion of the foam layer on the substrate.

During application the site must be kept windproof to limit the side-spray from the PUR foam. Moreover the temperature must be at least six degrees Celsius.

Another disadvantage is that the PUR foam can be applied in layers of a maximum of four centimetres thick. If a thicker layer is needed, for example to take up level differences, a levelling layer or screed must nevertheless be applied.

The precise ratio of different components must also be respected for the production of PUR foam, as the smallest deviation from this can drastically change the properties of the foam.

After application or hardening, the layer of PUR foam must be scraped or abraded to obtain a flat end result. This is especially important when floor heating is to be installed.

A floor insulation material based on plastic granules mixed with cement is also known. The mixture obtained can then be applied to the supporting floor.

An advantage of such a floor insulation material is that it is cheaper than the plates or blocks of PIR or PUR foam and can be applied directly to the supporting floor without the need for a levelling layer.

An important disadvantage is that the thermal insulation properties are far worse than PUR foam for example.

In order to satisfy the increasingly strict requirements relating to insulation, such a floor insulation material will not be suitable.

In some cases a relatively thick layer that is applied to the supporting floor nevertheless provides sufficient thermal insulation, but this is not always possible.

Moreover such an insulating material can only be processed at a temperature higher than zero degrees Celsius.

An additional disadvantage is that such an insulating material has a long drying time that can rise to more than twenty days, such that the further finishing of the floor must be postponed.

Another additional disadvantage is that before the granules can be mixed with the cement, the cement first has to mixed with water. This additional step costs extra time and moreover it is possible that too much or too little water is used such that the quality of the finished product can be inferior. In addition, after the course of time the water will seep through the substrate so that it is not suitable for application in wooden constructions.

The purpose of the present invention is to provide a solution at least one of the aforementioned and other disadvantages.

The object of the present invention is a composition of an insulating material, whereby the composition consists of polystyrene granules, rubber granules and a binder for binding the polystyrene granules and rubber granules together.

The binder will ensure that the polystyrene granules can bind to one another so that, after hardening of the binder, the granules with the binder form a whole.

An advantage is that such a composition has a good insulation value that is better than a floor insulation material based on plastic granules that are mixed with cement.

This is to do with the fact that by making use of a binder, the polystyrene granules and rubber granules in the insulating material are a lot closer together than when the granules are mixed with cement. Cement will not bind the granules together, but forms a matrix in which the granules are encased as it were, with a much lower density of granules than in the composition according to the invention.

Depending on the type of binder used, an insulation value comparable to PIR plates or PUR foam can be obtained.

Moreover the composition according to the invention is cheaper than PUR foam for example, and the substrate on which the composition is applied does not need to be cleared of dust, dirt, water, grease and other possible contaminants.

Moreover, no further special precautions need to be taken to apply the composition and this can be done at all temperatures. No water is required either for the processing or application of the insulating material, so that the seepage of water into underlying structures can be prevented.

The ratio in which the different components are mixed, i.e. the polystyrene granules, rubber granules and binder, is less critical than with PUR foam, for example. Deviations will not have any appreciable consequences.

Moreover there is no restriction with regard to the thickness of the layer to be applied, so that even with large level differences it is not necessary to apply a levelling layer to accommodate the level differences.

The layer of the composition applied to a substrate, for example as a floor insulation, can be spread flat, so that after hardening it is no longer necessary to scrape or abrade the layer in order to obtain a flat end result. Moreover a levelling layer is not required to level pipes or irregularities on the substrate.

A composition according to the invention will not shrink during hardening and afterwards.

By applying the still liquid composition on a substrate, a seamless layer can be obtained that will nicely fit along pipes and similar without seams or gaps. This will contribute to better thermal insulation.

Another additional advantage is that the rubber granules in the composition will ensure that the composition will also be acoustically insulating, whereby a strong damping of contact noises will be realised.

This property is particularly important when used as a floor or wall insulation, whereby apartment buildings and similar can be considered for example.

In this way a composition is obtained that will have both excellent thermal and acoustic insulation properties. In other words: with one single layer both the thermal and acoustic insulation can be provided, whereby two separate layers used to have to be applied. This is not possible with the known insulating materials, where a separate layer of acoustic insulation always has to be provided.

This not only saves time and money, but also the depth needed for the floor, and it also makes the realisation of the floor or similar much simpler.

An additional advantage of these rubber granules is that the compression strength of the composition is increased. When such a composition is used for floor insulation for example, the screed and finishing layer affixed thereon will not be able to sink and the final floor will be more resistant to higher loads.

The invention also concerns an insulating material that consists of a composition according to the invention, whereby it is in the liquid form or solid form that is obtained by the liquid form hardening.

The advantages of such an insulating material are similar to the advantages discussed above of a composition according to the invention.

The insulating material obtained in the solid form also has sufficient compression strength, so that it can support sufficient weight when used as floor insulation.

An additional advantage is that the insulating material in liquid form can be applied directly to a supporting floor.

The time required for hardening or 'drying' of the liquid form of the insulating material is only a few hours to a maximum of a couple of days, depending on the binder used. This has the advantage that the further processing or finishing can be done more quickly.

The invention also concerns a kit for manufacturing a composition according to the invention, whereby the kit comprises a quantity of separate polystyrene granules and rubber granules, and separate from them a quantity of liquid binder that is intended to be mixed with the polystyrene granules and rubber granules to form a liquid insulating material with a composition according to the invention.

The invention also concerns a method for manufacturing an insulating material with a composition according to the invention whereby the method comprises the step of binding polystyrene granules and rubber granules together, which are mixed to this end with a quantity of binder that is mixed with the polystyrene granules and rubber granules into a liquid insulating material in which the polystyrene granules and rubber granules are evenly distributed.

In other words a mixture with a homogeneous composition is formed.

The invention also concerns the use of an insulating material with a composition according to the invention for a number of diverse purposes.

Due to its mechanical properties and thermal and acoustic insulation properties the insulating material is very versatile and as a result can be used in many different applications and industries. The processing can be done in different and very simple ways. Moreover, surfaces against which or on which the insulating material is affixed does not need to be cleaned. These are additional advantages of an insulating material according to the invention.

With the intention of better showing the characteristics of the invention, a few preferred variants of an insulating material and a composition of such an insulating material according to the invention, a kit and a method for manufacturing insulating material and the use of such an insulating material are described hereinafter by way of an example, without any limiting nature, with reference to the accompanying drawings, wherein:
figure 1 schematically shows a perspective view of an insulating plate manufactured from an insulating material that consists of a composition according to the invention;
figure 2 shows a cross-section according to line II-II of figure 1;
figure 3 shows a method for manufacturing and processing a composition according to the invention;
figures 4 to 7 show different uses of an insulating material according to the invention.

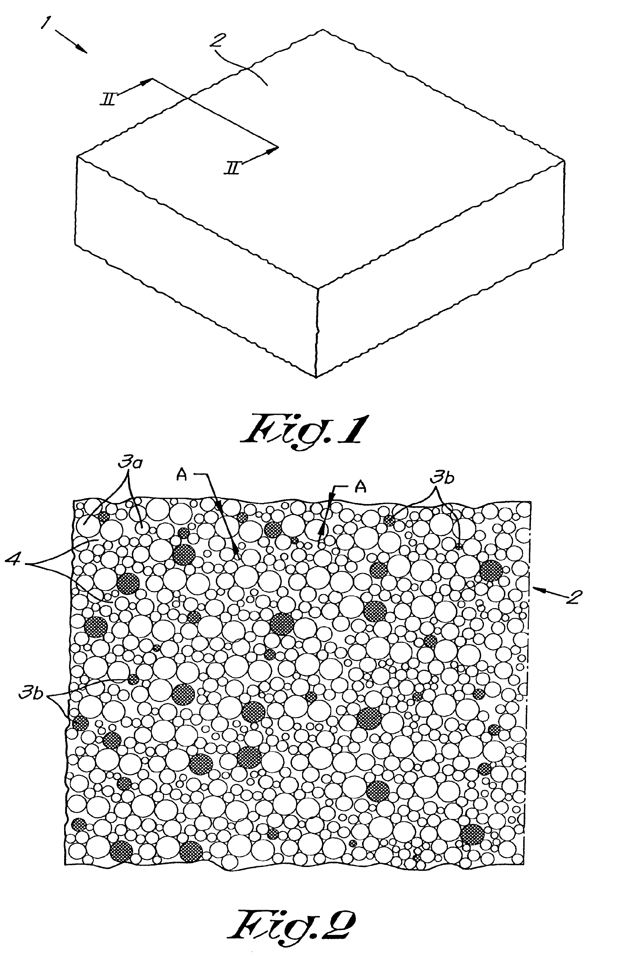

Figure 1 schematically shows an insulating plate 1 that is manufactured from an insulating material 2 in solid form according to the invention.

The insulating material 2 consists of a composition according to the invention, consisting of polystyrene granules 3a, rubber granules 3b and binder 4 for binding the granules to one another.

In other words the insulating material 2 consists of polystyrene granules 3a and rubber granules 3b that are bound together by means of a binder 4.

In this case the polystyrene granules 3a are made of expanded polystyrene and the binder is a polyurethane adhesive.

However, it is not excluded that the polystyrene granules 3a are manufactured from extruded polystyrene.

Moreover, instead of a polyurethane adhesive 4 a different type of binder can be used, such as an adhesive or coating such as a single-component adhesive, a two-component adhesive, a resin adhesive, a rubber adhesive, a polyurethane resin or a silicone adhesive, for example.

The minimum requirement is of course that the binder 4 is able to bind polystyrene granules 3 to one another, whereby preferably the binder 4 also has a better insulation value than cement. This has the advantage that the binder 4 has a sufficiently high insulation value.

The composition consists of a quantity of polystyrene granules 3a and rubber granules 3b and a quantity of binder 4, whereby the ratio of the volume or weight of the polystyrene granules 3a and rubber granules 3b to the binder 4 can vary from 1 to 0.8 up to 1 to 10. The density of the composition is preferably a maximum of 280 kg/m³. Preferably for the quantity of polystyrene granules 3a and rubber granules 3b, use is made of a mixture of polystyrene granules 3a and rubber granules 3b consisting of one cubic metre of polystyrene granules 3a to which 15 to 780 kilograms of rubber granules 3b are added, and even better 25 to 780 kilograms of rubber granules 3b, or better still 25 to 750 kilograms of rubber granules 3b, for example 55 kilograms of rubber granules 3b.

This has the advantage that the acoustic insulation properties of the composition are optimum. Thus, when the composition is used as a floor insulation, and by making use of the composition, a reduction of contact noises of up to 27 decibels can be obtained.

Figure 2 shows a cross-section of the insulating plate 1 whereby the structure of the insulating material 2 can clearly be seen.

In this case, but not necessarily, the polystyrene granules 3a and the rubber granules 3b have a diameter A that is between two and six millimetres. It is also possible that the diameter A is between two and eight millimetres.

Preferably the diameter of the rubber granules 3b is equal to or smaller than the diameter of the polystyrene granules 3a.

It is however possible that all polystyrene granules 3a and rubber granules 3b have the same or approximately the same diameter A.

The polystyrene granules 3 bind together by means of the binder 4. As a result, the density of polystyrene granules 3a and rubber granules 3b in the composition is much greater than in an insulating material 2 based on polystyrene granules 3a and cement, for example.

This means that the thermal insulation properties of the insulating material 2 will be very good and better than floor insulation based on polystyrene granules 3a and cement for example, because the concentration of polystyrene granules 3a is higher in the insulating material 2 according to the invention.

The insulating plate 1, as shown in figure 1, can be used to insulate a floor, wall, roof or similar for example.

According to a preferred aspect of the invention the polystyrene granules 3a contain an additive that has thermal or acoustic properties, such as graphite for example.

According to another preferred aspect of the invention, a fire retardant is added to the composition such as hexabromocyclododecane for example. This fire retardant can be added to the binder, for example.

By adding additives or fire retardants, the insulating plate 1 can be used for a multitude of specific applications.

However, due to the good thermal and acoustic insulation properties and the increased compression strength that it already has, an insulating plate 1, and more generally a composition according to the invention, without such additives can also be used for a multitude of applications.

According to another preferred embodiment, glass beads are added to the composition, whereby these glass beads have a dimension that is preferably smaller than 250 micrometres. In other words the glass beads are at least 8 times smaller than the polystyrene granules 3a.

Due to the addition of these glass beads the volume of the composition will increase, without more binder 4 or polystyrene granules 3a or rubber granules 3b necessarily having to be used. By being able to save on the quantity of binder 4 the cost price can be reduced.

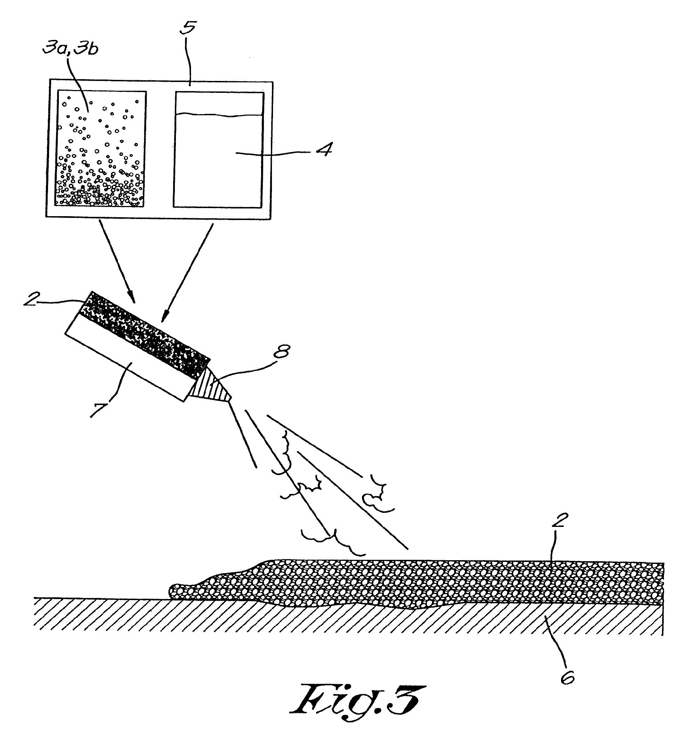

Figure 3 presents a method for manufacturing an insulating material 2 with a composition according to the invention, whereby in this case it starts with a kit 5 for manufacturing a composition according to the invention.

The kit 5 comprises a quantity of separate polystyrene granules 3a and rubber granules 3b on the one hand, and separate from them a quantity of liquid adhesive 4.

As shown in figure 3 the polystyrene granules 3a and rubber granules 3b are mixed with a quantity of binder 4, so that a liquid insulating material 2 is obtained in which the polystyrene granules 3a and rubber granules 3b are evenly distributed.

Hereby the polystyrene granules 3a and the rubber granules 3b are already mixed beforehand according to the above-mentioned ratio.

Then in the case of figure 3 the liquid insulating material 2 is applied as an insulating layer on or against a surface 6.

This can be done by machine, as shown in figure 3, with a mixing machine 7 with a spray head 8. This can also be done at atmospheric pressure, an underpressure or overpressure, with a worm pump, a mixer, a mill or electronically.

It can also be applied by hand. The great advantage is that the processing and application are very simple and can be done by unskilled people or a DIY'er.

The insulating material 2 can also be used in this way for levelling or inclining the surface 6.

The mixture obtained can also be processed by introducing the liquid product in a mould to let it harden into a product with a fixed form such as an insulating plate 1, insulating block, insulating strip or similar.

In this way an insulating plate 1 as shown in figure 1 can be obtained.

During hardening in the mould a pressure can be applied to the insulating material 2. This will increase the density of the end product, such that the sturdiness or strength of the insulating plate 1 will increase so that it will be suitable for use as a floor insulation or as building blocks, for example.

When the liquid insulating material 2 is processed as shown in figure 3, it can be used in many different ways.

It can be used for filling cavities in material, surfaces, objects, constructions or similar or for cladding materials, surfaces, objects, constructions and similar.

The most obvious application is its use as a floor insulation, whereby the liquid insulating material 2 is applied by machine or otherwise on a supporting floor, without an intermediate filling layer, after which one or more finishing layers can be applied to the insulating material to form the actual floor. Hereby, the insulating material can be used to even out pipes that are possibly affixed on the supporting floor. The liquid insulating material 2 will harden and be ready for further finishing very quickly.

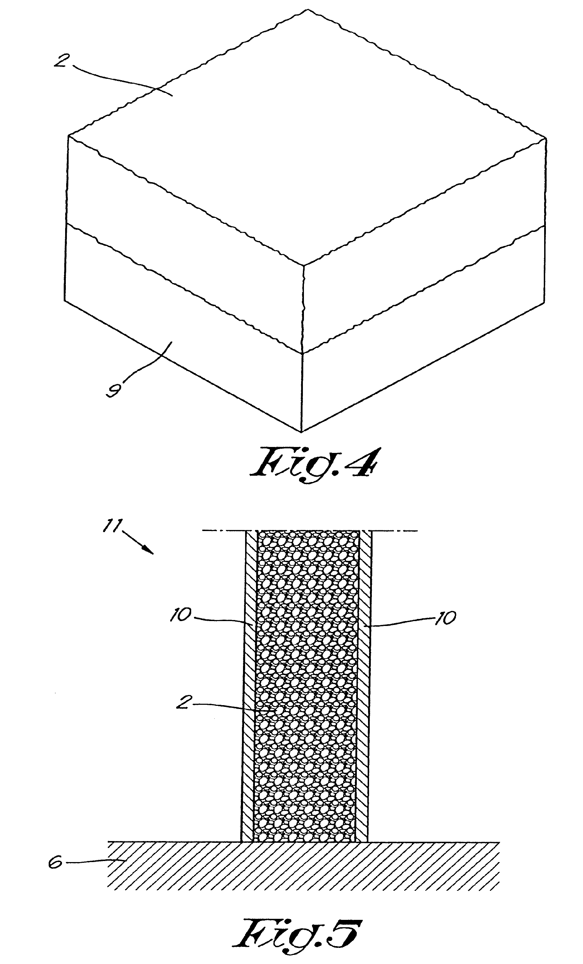

This is schematically shown in figure 4, which shows a cross-section of a supporting floor 9 with a layer of insulating material 2 affixed thereon.

The sound insulation and thermal insulation can be realised with this one layer, thus additional sound insulation does not have to be provided. This makes the method faster, cheaper and simpler.

Figure 5 shows how the insulating material 2 is used to bond two constructions together, in this case plasterboard 10 for example.

In this way an insulating composite plate 11 is formed as it were that can be used as an inside wall or similar.

By adding the correct additives this inside wall can also be fire resistant or fire retardant in addition to being heat and sound insulating.

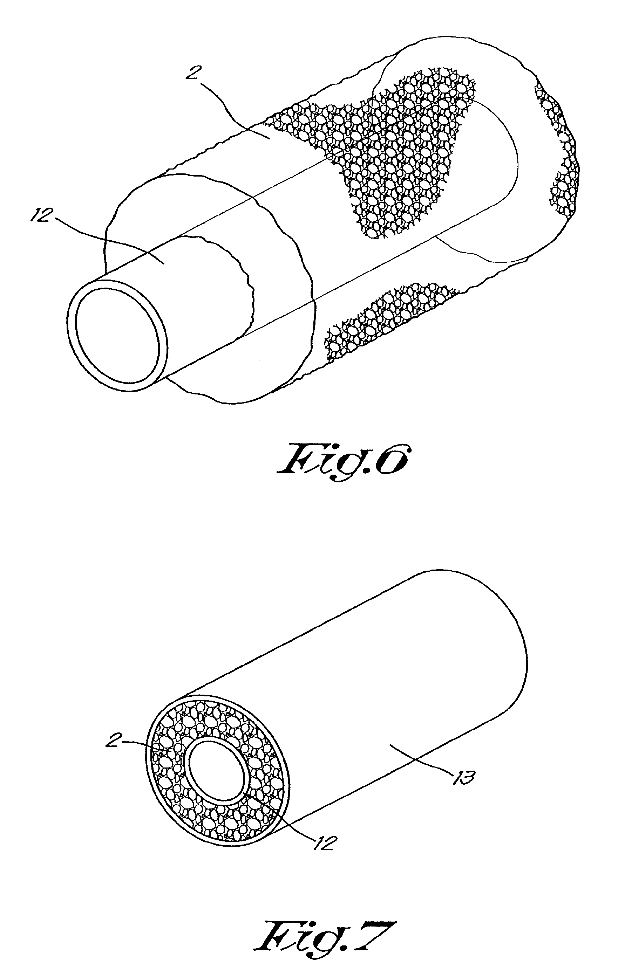

Figure 6 shows the use for cladding pipes 12, for example, to insulate pipes 12 for hot water or central heating pipes or similar.

Figure 7 shows a variant of figure 6, whereby in this case a first pipe 12 is enclosed by a second pipe 13, whereby the space between the two pipes 12, 13 is filled with the insulating material 2.

The use of the insulating material 2 according to the invention for filling spaces in structures can be used for filling car bumpers and similar, for example.

The material can be used in many different industries, from the construction industry and automotive industry to shipbuilding.

The insulating material 2 can also be used for example for cladding hollow-core slabs and walls of prefabricated constructions with a layer of insulating material 2 in the factory or workplace, after which the clad constructions can be placed on one another on location. In this way thermal and acoustic insulation can be provided beforehand and the finishing done more quickly on site.

When the insulating material 2 is not hardened under pressure it is porous, i.e. it is permeable to water.

As a result of this property the insulating material 2 can also be used as a floor for terraces, stables, cages and similar to act as a drainage base.

The above examples show the versatility of the insulating material 2 with a composition according to the invention. However, it is clear that the insulating material 2 can be used in many other applications.

The present invention is by no means limited to the embodiments described as an example and shown in the drawings, but such an insulating material and a composition of such an insulating material according to the invention, a kit and a method for manufacturing insulating material and the use of such an insulating material can be realised according to different variants without departing from the scope of the invention.

Another, unclaimed, aspect of the invention concerns a composition of an insulating material (2), characterised in that the composition consists of polystyrene granules (3a) and adhesive (4) for binding the polystyrene granules (3a) together.

Preferably the composition consists of a quantity of polystyrene granules (3a) and a quantity of adhesive (4), whereby the ratio of the volume or the weight of the polystyrene granules (3a) to the adhesive (4) can vary from 1 to 0.8 up to 1 to 10.

Preferably the adhesive (4) is a single-component adhesive, a two-component adhesive, a resin adhesive, a polyurethane adhesive, a rubber adhesive, a polyurethane resin, a silicone adhesive, natural resin or binder.

Preferably the adhesive (4) has a higher insulation value than cement.

Preferably the polystyrene granules (3a) are made of expanded polystyrene or extruded polystyrene.

Preferably the polystyrene granules (3a) have a diameter (A) of two to eight millimetres.

Preferably polystyrene granules (3) contain an additive, that has thermal or acoustic insulation properties.

Preferably the composition has a density of up to a maximum of 780 kg/m³.

Preferably the composition has a density of up to a maximum of 280 kg/m³.

Preferably a fire retardant is added to the composition, preferably to the adhesive (4).

Preferably glass beads are added to the composition, whereby these glass beads have a dimension that is preferably smaller than 250 micrometres.

The use and processing of this composition is analogous to the use and processing of the composition according to the invention.

## Claims

1. Composition of an insulating material (2), **characterised in that** the composition consists of polystyrene granules (3a), rubber granules (3b) and binder (4) for binding the polystyrene granules (3a) and the rubber granules (3b) to one another.

2. Composition according to claim 1, **characterised in that** the composition consists of a quantity of polystyrene granules (3a) and rubber granules (3b) and a quantity of binder (4), whereby the ratio of the volume or weight of the polystyrene granules (3a) and rubber granules (3b) to the binder (4) can vary from 1 to 0.8 up to 1 to 10.

3. Composition according to claim 2, **characterised in that** for the quantity of polystyrene granules (3a) and rubber granules (3b) use is made of a mixture of polystyrene granules (3a) and rubber granules (3b) consisting of 1 cubic metre of polystyrene granules (3a), to which 15 to 750 kilograms of rubber granules (3b) are added.

4. Composition according to any one of the previous claims, **characterised in that** the binder (4) is an adhesive or coating, such as a single-component adhesive, a two-component adhesive, a resin adhesive, a polyurethane adhesive, a rubber adhesive, a polyurethane resin, a silicone adhesive, natural resin or binder for example.

5. Composition according to any one of the previous claims, **characterised in that** the polystyrene granules (3a) and the rubber granules (3b) have a diameter (A) of two to eight millimetres, whereby the diameter of the rubber granules (3b) is equal to or less than the diameter of the polystyrene granules (3b).

6. Composition according to any one of the previous claims, **characterised in that** glass beads are added to the composition, whereby these glass beads have a dimension that is preferably smaller than 250 micrometres.

7. Insulating material that consists of a composition according to any one of the previous claims, **characterised in that** it is in a liquid form or a solid form that is obtained by the liquid form hardening.

8. Method for manufacturing an insulating material (2) with a composition according to any one of the previous claims 1 to 6, **characterised in that** the method comprises the step of binding polystyrene granules (3a) and rubber granules (3b) together, which are mixed to this end with a quantity of binder (4) that is mixed with the polystyrene granules (3a) and rubber granules (3b) into a liquid insulating material (2) in which the polystyrene granules (3a) and rubber granules (3b) are evenly distributed.

9. Method according to claim 8, **characterised in that** the liquid product is introduced into a mould in order to allow it to harden into a product with a solid form such as an
insulating plate (1), an insulating block, an insulating strip or similar.

10. Method according to claim 9, **characterised in that** during the hardening in the mould a pressure is applied to the insulating material (2).

11. Method according to claim 8, **characterised in that** the method also comprises the step of applying the liquid insulating material (2) as an insulating layer on or against a surface (6).

12. Use of an insulating material with a composition according to any one of the previous claims 1 to 6, **characterised in that** the insulating material (2) is used for filling cavities in materials, surfaces (6), objects, constructions or similar, or for cladding materials, surfaces (6), objects, constructions or similar.

13. Use of an insulating material with a composition according to any one of the previous claims 1 to 6, **characterised in that** the insulating material (2) is used for levelling or inclining a surface (6).

14. Use of an insulating material with a composition according to any one of the previous claims 1 to 6, **characterised in that** the insulating material (2) is used as a floor for terraces, stables, cages and similar, in order to act as a drainage base.

15. Use of an insulating material according to any one of the previous claims 1 to 6, **characterised in that** the insulating material (2) is used for insulating floors, whereby the insulating material (2) is applied as an insulating layer on the base of the floor, after which one or more finishing layers can be affixed on the insulating layer to form the actual floor.

16. Kit for manufacturing a composition according to any one of the previous claims 1 to 6, **characterised in that** the kit (5) comprises a quantity of separate polystyrene granules (3a) and rubber granules (3b), and separate from them a quantity of liquid binder (4) that is intended to be mixed with the polystyrene granules (3a) and rubber granules (3b) to form a liquid insulating material (2) with a composition according to any one of the previous claims 1 to 6.
